# EUROPÄISCHE PATENTANMELDUNG

(11) **EP 1 533 640 A2**
(43) Veröffentlichungstag der Anmeldung: **25.05.2005**
(21) Anmeldenummer: 04027400.3
(22) Anmeldetag: 18.11.2004
(51) Int. Cl.: G02B 21/06, G02B 21/22

(54) **Auflicht-Fluoreszenz-Stereomikroskop**

(30) Priorität: 21.11.2003 DE 10355523
(71) Anmelder: CARL ZEISS JENA GmbH, 07745 Jena (DE)
(72) Erfinder: Kleinteich, Lothar, 07747 Jena (DE); Kaufhold, Tobias, 07749 Jena (DE); Winterot, Johannes, 07745 Jena (DE); Osten, Günter, 07749 Jena (DE); Knoblich, Johannes, 07747 Jena (DE)

(57) **Zusammenfassung**

Die Erfindung betrifft ein Stereomikroskop, welches insbesondere für die Fluoreszenzbeobachtung im Auflicht geeignet ist. Eine besonders vorteilhafte Fluoreszenzanregung wird erreicht, wenn der Beleuchtungsstrahlengang ein Zoomsystem (38) aufweist, mit dessen Hilfe eine an den Zoomfaktor des Beobachtungsstrahlengangs (8) angepasste Ausleuchtung realisiert werden kann.

## Beschreibung

Die Erfindung betrifft ein Stereomikroskop, welches insbesondere für die Fluoreszenzbeobachtung im Auflicht geeignet ist.

Die Nutzung des Fluoreszenzkontrastes in der Stereomikroskopie hat in jüngster Zeit durch neue Zielstellungen für die Anwendungen in Biologie, Medizin, Wissenschaft und Technik zunehmend an Bedeutung gewonnen. Ein Beispiel für eine solche Applikation ist der Einsatz des Fluorochromes GFP (Green Fluorescent Protein) in der Mikrobiologie.

Bekannte Ausrüstungen für die Fluoreszenzmikroskopie an Stereomikroskopen beruhen auf verschiedenen Prinzipien. Diese sind:

### a) Ausrüstungen für externe, schräge Auflicht- Fluoreszenzanregung mit Lichtleitern und Fokussiervorsätzen

Ausrüstungen für die externe, schräge Auflicht- Fluoreszenzanregung mit Fokussiervorsätzen an den Stereomikroskopen Stemi 1000/2000, SV6/SV11/SV11Apo werden von der Anmelderin angeboten; diese sind beschrieben in Carl Zeiss micro info "Ausrüstung FI S - Fluoreszenzkontrast mit Stereomikroskopen" (40- 510/9.97). Von der Firma Olympus ist ein Auflicht-Fluoreszenz-Adapter SZX-FLUV bekannt.

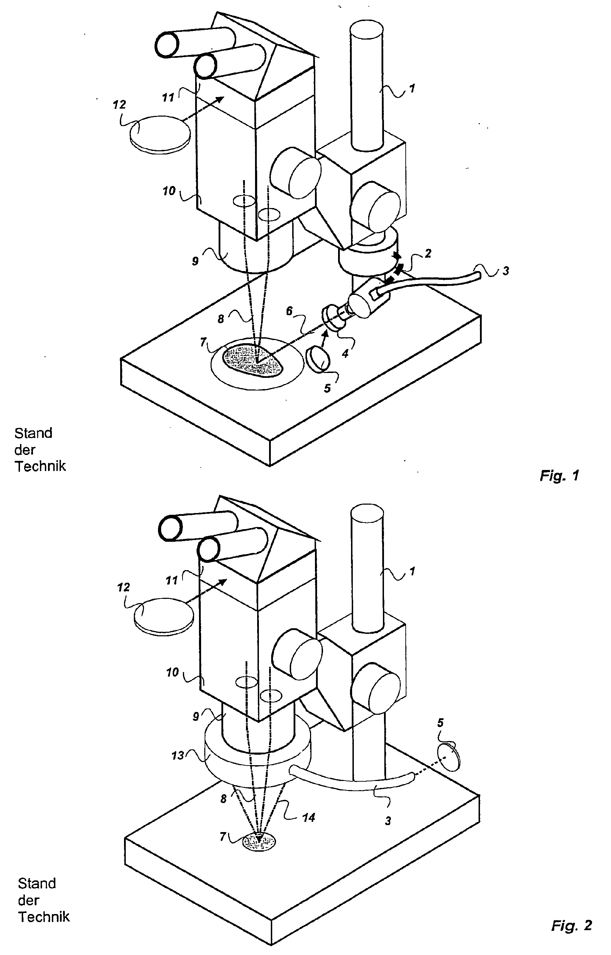

Ein Ausführungsbeispiel einer solchen externen, schrägen Auflicht- Fluoreszenzanregung am Stereomikroskop zeigt ***Fig. 1***. Der von einer Kaltlichtquelle kommende Lichtleiter ***3*** mit aufgestecktem verschiebbarem Fokussiervorsatz ***4*** wird von einem an der Stativsäule ***1*** eines Stereomikroskops geklemmten flexiblen, freitragenden Halter ***2*** neben Stereomikroskopkörper ***10*** und Objektiv ***9*** gehalten. Durch Verdrücken des flexiblen, freitragenden Halters ***2*** kann je nach dem neben dem Mikroskop ***10*** vorhandenen freien Platz der Neigungswinkel des Anregungsstrahlenganges **6** und der Abstand des Fokussiervorsatzes ***4*** zum Objekt eingestellt werden. Der Fokussiervorsatz ***4*** bildet den Leuchtfleck des Lichtleitkabels in die Objektebene ab, durch axiales Verschieben des Fokussiervorsatzes ***4*** kann das Bild des Leuchtflecks ***7*** in der Objektebene fokussiert werden; der jeweilige Anregungsfilter ***5*** wird in den Fokussiervorsatz ***4*** eingesetzt. Zur Beobachtung des fluoreszierenden Objektes wird das zugehörige Sperrfilter ***12*** in einen nach Objektiv ***9*** und Mikroskopkörper ***10*** angeordneten Filterzwischentubus ***11*** in den stereoskopischen Strahlengang ***8*** eingeschoben. Der ebenfalls an der Stativsäule klemmbare Blendschutz und die Kaltlichtquelle sind in ***Fig. 1*** nicht mit dargestellt.

Diese externe, schräge Auflicht-Fluoreszenzanregung mit Lichtleitern und Fokussiervorsätzen hat den Vorteil, dass die Intensität der Anregung durch Verschieben des Fokussierkopfes auf dem lichtführenden Beleuchtungsteil und durch Einstellung des Abstandes des Beleuchtungsteils vom Objekt optimiert werden kann, dass die Intensität der Anregung hoch ist (Beleuchtungsaperturen sind größer als die Beobachtungsapertur), und dass, da Beleuchtungs- und Beobachtungskanal räumlich voneinander getrennt sind, vom Anregungsstrahlengang kaum Störlicht in den Beobachtungskanal gelangt.

Von Nachteil ist dabei, dass der in der Objektebene auftreffende Lichtfleck abhängig von dem Neigungswinkel der Beleuchtung, dem Abstand des Fokussiervorsatzes zum Objekt und der Justierung des Fokussiervorsatzes mehr oder weniger elliptisch ist und daher einen Intensitätsabfall in der Längsachse der Beleuchtung hat; dass der Leuchtfleck auch bei Vergrößerungsänderung am Stereomikroskopzoom eine fester Größe hat, wobei das ausgeleuchtete Objektfeld stets mehr oder weniger größer als das vom Mikroskop erfasste Objektfeld ist, und dadurch höhere Objekte/Vergrößerungen geringere Bildhelligkeiten haben; dass bei einer Beleuchtung von hinten Anregungslicht zum Beobachter hin reflektiert werden kann; dass Anregungs- und Sperrfilter mit unterschiedlichen Wechselstellen weit voneinander entfernt liegen und daher einzeln aufwendig gewechselt werden müssen (damit ist eine Modulbauweise nicht möglich); und dass bei Wechsel der Objektive oder Höhenänderung der Einstellebene die Halterung mit Beleuchtung nachgeführt und optimiert werden muss.

### b) Ausrüstungen für externe, schräge Auflicht-Fluoreszenzanregung mit Ringleuchten

Als solche Ausrüstungen sind von der Firma NIKON der Fluoreszenz-Ring-Illuminator C-FPS und von der Firma MEIJI das Fluorescent-Ring-Light MA 305 bekannt.

Ein Ausführungsbeispiel einer solchen externen, schrägen Auflicht- Fluoreszenzanregung mit Ringleuchten am Stereomikroskop zeigt ***Fig. 2.*** Die Ringleuchte ***13*** mit Lichtleiter ***3*** ist am Objektiv ***9*** angesetzt und erzeugt mit dem im Abstrahlwinkel schräg zusammenlaufenden Anregungsstrahlengang ***14*** den kreisförmigen Leuchtfleck ***7*** in der Objektebene; der jeweilige Anregungsfilter ***5*** wird in die Filteraufnahme einer Kaltlichtquelle eingesetzt. Zur Beobachtung des fluoreszierenden Objektes wird das zugehörige Sperrfilter ***12*** in einen nach Objektiv ***9*** und Mikroskopkörper ***10*** angeordneten Filterzwischentubus ***11*** in den stereoskopischen Strahlengang ***8*** eingeschoben. Der an der Stativsäule klemmbare Blendschutz und die Kaltlichtquelle sind in ***Fig. 2*** ebenfalls nicht mit dargestellt.

Die externe, schräge Auflicht- Fluoreszenzanregung mit Ringleuchten hat den Vorteil, dass der in der Objektebene auftreffende Leuchtfleck kreisförmig ist; dass bei Wechsel der Objektive oder Höhenänderung der Einstellebene Beleuchtung und Leuchtfleck in der Objektebene bleiben; und dass, da Beleuchtungs- und Beobachtungskanal räumlich voneinander getrennt sind, vom Anregungsstrahlengang kaum Störlicht in den Beobachtungskanal gelangt.

Von Nachteil ist dabei, dass der Leuchtfleck auch bei Vergrößerungsänderung am Stereomikroskopzoom eine fester Größe hat, wobei das ausgeleuchtete Objektfeld stets mehr oder weniger größer als das vom Mikroskop erfasste Objektfeld ist, und dadurch höhere Objektivvergrößerungen geringere Bildhelligkeiten haben; dass der Leuchtfleck in der fokussierten Objektebene nur bei bestimmten Objektiven optimal ausgeleuchtet ist; dass wegen der mehr allseitigen Abstrahlungsrichtung der Ringleuchte die Beleuchtungsintensität gering ist; und dass Anregungs- und Sperrfilter mit unterschiedlichen Wechselstellen weit voneinander entfernt liegen und daher einzeln aufwendig gewechselt werden müssen (auch hier ist damit eine Modulbauweise nicht möglich).

### c) Koaxiale Auflicht-Fluoreszenzanregung durch beide Kanäle des Stereomikroskops

Eine solche Ausrüstung ist der GFP-Illuminator der Firma Kramer Scientific Corporation, Elmsford, N.Y., USA, für die Carl-Zeiss- Stereomikroskope SV6/SV, dessen Grundprinzip in US 6147800 beschrieben ist.

Ein Ausführungsbeispiel einer solchen koaxialen Auflicht- Fluoreszenzanregung durch beide Kanäle des Stereomikroskops zeigt ***Fig. 3.*** Zwischen Mikroskopkörper ***10*** und Beobachtungstubus ***15*** ist ein Fluoreszenzilluminator ***16*** angeordnet, bei dem das seitlich von links einfallende Beleuchtungslicht ***17*** durch den Anregungsfilter ***5*** auf zwei dichroitische Spiegel ***19*** trifft, die das Anregungslicht ***14*** durch beide Zoomkanäle von Mikroskopkörper ***10*** und Objektiv ***9*** zum kreisförmigen Leuchtfleck ***7*** in der Objektebene lenken; der vom fluoreszierenden Objekt ausgehende stereoskopischen Beobachtungsstrahlengang ***8*** läuft zurück über Objektiv ***9*** und Mikroskopkörper ***10*** wieder durch die zwei dichroitische Spiegel ***19*** und die nachfolgend angeordneten zwei Sperrfilter ***12*** in den Beobachtungstubus ***15.*** Anregungsfilter ***5,*** dichroitische Spiegel ***19*** und Sperrfilter ***12*** sind als Schiebermodul ***20*** ausgeführt, der je nach Fluoreszenzuntersuchungsverfahren bestückt im Fluoreszenz-Illuminator ***16*** gewechselt werden kann. Bei einem Wechsel der Fluoreszenzmodule schaltet sich als Blendschutz ein mit der Modulaufnahme gekoppelter Verschluss ***18*** automatisch ein.

Diese Art der Auflicht- Fluoreszenzanregung durch beide Kanäle des Stereomikroskops hat den Vorteil, dass der in der Objektebene auftreffende Leuchtfleck kreisförmig ist und un-ter dem Stereowinkel beleuchtet und betrachtet wird; dass die Größe des Leuchtflecks durch die jeweilige Zoom- und Objektiwergrößerung bestimmt ist; dass der optimal ausgeleuchtete Leuchtfleck stets in der fokussierten Objektebene liegt und daher ein Objektivwechsel und ein Umfokussieren am Mikroskop ohne Manipulationen an der Beleuchtung möglich ist; und dass Anregungsfilter, dichroitischer Spiegel und Sperrfilter dicht beieinander liegen, wodurch sie gut als Module für Schieber oder Filterrad ausgeführt werden können, was einen schnellen Wechsel der Fluoreszenzmodule auf einem einmal bestückten Schieber oder Filterrad ermöglicht.

Nachteilig dabei ist, dass die Beleuchtung durch den Beobachtungskanal erfolgt und daher die Beleuchtungsintensität von der Zoomapertur bestimmt ist; sie kann nur durch Verstellen des Lampenkollektors optimiert werden. Die Transmission der eigentlich für die stereoskopische Beobachtung ausgelegten Optik in den Zoomkanälen wirkt sich ungünstig auf die Intensität der Fluoreszenzanregung im UV- Bereich aus; und das Anregungslicht kann in den Zoomkanälen Falschlicht verursachen, was den Bildkontrast verschlechtert.

### d) Koaxiale Auflicht- Fluoreszenzanregung durch einen Kanal des Stereomikroskops

Bekannt sind solche Einrichtungen als LEICA-Fluoreszenz-Modul für MS-MZ, OLYMPUS - Fluoreszenz-Illuminator P-FLA und NIKON Fluoreszenz-Illuminator SZX- RFL.

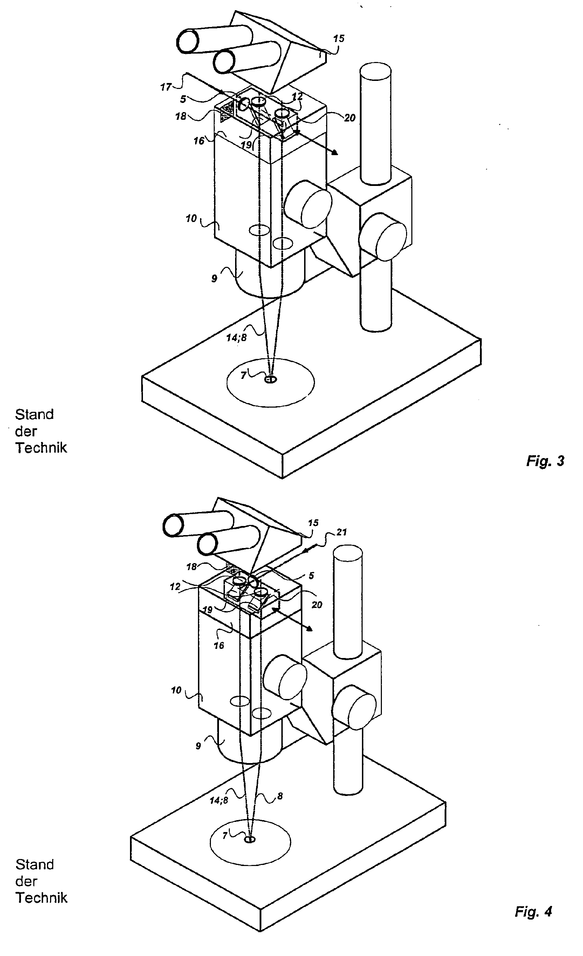

***Fig. 4*** zeigt ein Ausführungsbeispiel einer solchen koaxialen Auflicht-Fluoreszenzanregung durch einen Kanal des Stereomikroskops. Zwischen Mikroskopkörper ***10*** und Beobachtungstubus ***15*** ist ein Fluoreszenz-Illuminator ***16*** angeordnet, bei dem das in einen Stereokanal von hinten (das heißt von der dem Bediener entgegengesetzten Seite) einfallende Beleuchtungslicht ***21*** durch den Anregungsfilter ***5*** auf einen dichroitischen Spiegel ***19*** trifft, der das Anregungslicht ***14*** durch den einen Zoomkanal von Mikroskopkörper ***10*** und Objektiv ***9*** zum kreisförmigen Leuchtfleck ***7*** in der Objektebene lenkt. Der vom fluoreszierenden Objekt ausgehende stereoskopischen Beobachtungsstrahlengang ***8*** läuft in beiden Stereokanälen zurück über Objektiv ***9*** und Mikroskopkörper ***10*** wieder durch die beiden dichroitische Spiegel ***19*** und die nachfolgend angeordneten zwei Sperrfilter ***12*** in den Beobachtungstubus ***15.*** Anregungsfilter ***5,*** dichroitische Spiegel ***19*** und Sperrfilter ***12*** sind als Schiebermodul ***20*** ausgeführt, der je nach Fluoreszenzuntersuchungsverfahren bestückt im Fluoreszenzilluminator ***16*** gewechselt werden kann. Bei einem Wechsel der Fluoreszenzmodule schaltet sich ein mit der Modulaufnahme gekoppelter Verschluss ***18*** automatisch als Blendschutz für den Benutzer ein.

Diese Art der Auflicht- Fluoreszenzanregung durch einen Kanal des Stereomikroskops hat den Vorteil, dass der in der Objektebene auftreffende Leuchtfleck kreisförmig ist; dass die Größe des Leuchtflecks durch die jeweilige Zoom- und Objektiwergrößerung bestimmt ist; dass der optimal ausgeleuchtete Leuchtfleck stets in der fokussierten Objektebene liegt und daher ein Objektivwechsel und ein Umfokussieren am Mikroskop ohne Manipulationen an der Beleuchtung möglich ist; und dass Anregungsfilter, dichroitischer Spiegel und Sperrfilter dicht beieinander liegen, wodurch sie gut als Module für Schieber oder Filterrad ausgeführt werden können, was einen schnellen Wechsel der Fluoreszenzmodule auf einem einmal bestückten Schieber oder Filterrad ermöglicht.

Von Nachteil ist, dass die Beleuchtung durch den einen Beobachtungskanal unter dem Stereowinkel einseitig erfolgt; dass die Beleuchtungsintensität von der Zoomapertur bestimmt ist; sie kann nur durch Verstellen des Lampenkollektors optimiert werden. Die Transmission der eigentlich für die stereoskopische Beobachtung ausgelegten Optik in den Zoomkanälen wirkt sich ungünstig auf die Intensität der Fluoreszenzanregung im UV-Bereich aus; und das Anregungslicht kann in dem Anregungskanal Falschlicht verursachen und den Bildkontrast verschlechtern, wodurch das Bild im Anregungskanal heller als in dem reinen Beobachtungskanal ist. In dem reinen Beobachtungskanal reicht die Anordnung nur des Sperrfilters zur Wellenlängenselektierung aus; bei eng beieinander liegenden Wellenlängenbereichen ist zum Sperrfilter noch der zur Anregung passende Dichroitischer Spiegel notwendig.

### e) Integrierte Auflicht-(Fluoreszenz) Beleuchtung durch zwei außerhalb der Beobachtungskanäle des Stereomikroskops liegende Beleuchtungskanäle

Eine solche Anordnung von Beleuchtungskanälen in einem Stereomikroskop, vorzugsweise mit zwei, etwas zur optischen Achse geneigten Lichtleitern ist in der DE-Offenlegungsschrift DE 19822255 der Anmelderin beschrieben.

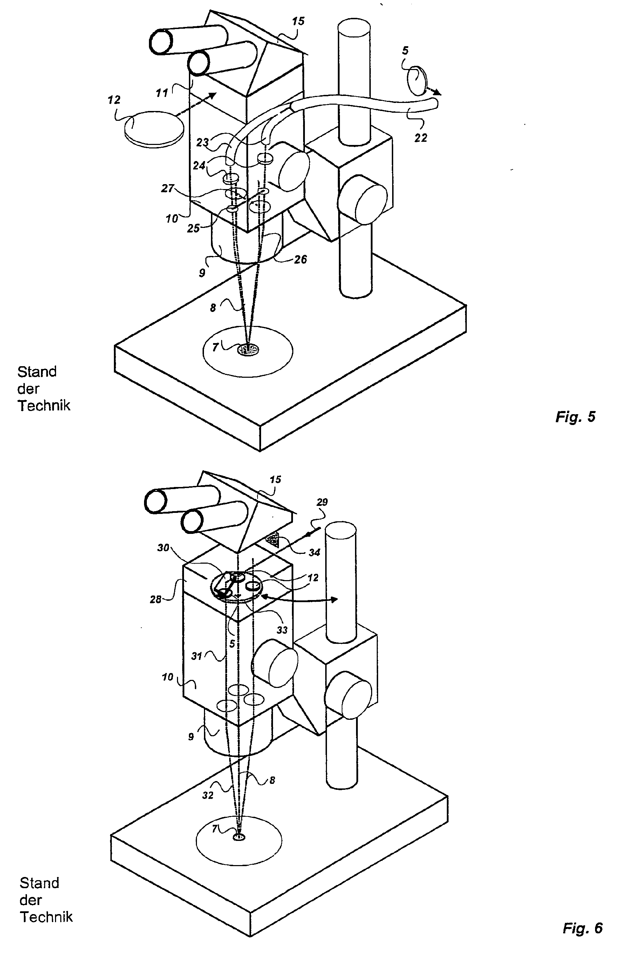

Ein Ausführungsbeispiel dieser Beleuchtungsanordnung zeigt ***Fig. 5.*** Ein von einer Kaltlichtquelle kommender Zwillings-Lichtleiter ***22*** ist in den Mikroskopkörper ***10*** geführt und dort in zwei Einzelfaserbündel **23** aufgeteilt, die zusammen mit den zugehörigen Fokussieroptiken ***24*** eine orthogonal zur Beobachtungsebene ***27*** liegende Beleuchtungsebene 25 bildet. Der jeweilige Fluoreszenz-Anregungsfilter ***5*** wird in die Filteraufnahme der Kaltlichtquelle eingesetzt, und das aus den Einzelfaserbündeln ***23*** austretende Licht wird durch die Fokussieroptiken ***24*** und das Objektiv ***9*** als Anregungsstrahlengang ***26*** zum kreisförmigen Leuchtfleck **7** in die Objektebene gelenkt. Zur Beobachtung des fluoreszierenden Objektes wird das zugehörige Sperrfilter ***12*** in einen zwischen Mikroskopkörper ***10*** und Beobachtungstubus ***15*** angeordneten Filterzwischentubus ***11*** in den vom fluoreszierenden Objekt ausgehenden stereoskopischen Strahlengang ***8*** eingeschoben. Der an der Stativsäule klemmbare Blendschutz und die Kaltlichtquelle sind in ***Fig. 5*** nicht mit dargestellt.

Vorteilhaft bei dieser Beleuchtungsanordnung ist, dass sie mit minimalem Platzbedarf erfolgt und der mechanisch- optische Grundaufbau nur minimal beeinflusst wird; dass das maximal sichtbare Objektfeld unabhängig von der Lage und Beobachtungsrichtung des Stereomikroskops eine helle, homogene und reflexfreie Beleuchtung des Objektes ermöglicht; dass der in der Objektebene auftreffende Leuchtfleck kreisförmig ist und stets in der fokussierten Objektebene liegt und daher ein Objektivwechsel und ein Umfokussieren am Mikroskop ohne Manipulationen an der Beleuchtung möglich ist; und dass die Fokussieroptiken der Lichtleiter auch als mit dem Beobachtungszoom gekoppelte Zoomsysteme ausgeführt sein können, und dadurch die Größe des Leuchtflecks der jeweiligen Zoom- und Objektiwergrößerung angepasst ist.

Von Nachteil ist dabei, dass Anregungs- und Sperrfilter mit unterschiedlichen Wechselstellen weit voneinander entfernt liegen und daher einzeln gewechselt werden müssen (damit ist eine Modulbauweise nicht möglich).

### f) Integrierte Koaxiale Auflicht- Fluoreszenzanregung durch einen den Stereokanälen analogen dritten Kanal, der mittig versetzt zwischen den üblichen Stereokanälen liegt

Diese Anordnung eines den Stereokanälen analogen dritten Beleuchtungskanal, der mittig versetzt zwischen den üblichen Stereokanälen liegt, ist im Schutzrecht EP 1 010 030 beschrieben.

In EP 1 010 030 sind ein einkanaliger Zoomkörper (Vergrößerungswechsler genannt) und ein zweikanaliger (Stereo-)Zoomkörper (ebenfalls Vergrößerungswechsler genannt) beschrieben, welche jeweils einen weiteren zum Beobachtungsstrahlengang wenigstens annähernd parallelen Beleuchtungsstrahlengang aufweisen.

Ein Ausführungsbeispiel der koaxialen Auflicht- Fluoreszenzanregung durch den dritten, den beiden Kanälen des Stereomikroskops analogen Kanal zeigt ***Fig. 6.*** Zwischen Mikroskopkörper ***10*** und Beobachtungstubus ***15*** ist ein Fluoreszenzilluminator ***28*** angeordnet, der mit dem Mikroskopkörper ***10*** fest verbunden ist. Das von hinten einfallende Beleuchtungslicht ***29*** wird von einem feststehenden Spiegel ***30*** durch den Anregungsfilter ***5*** in den Beleuchtungskanal ***31*** gelenkt, der das Anregungslicht ***32*** durch Mikroskopkörper ***10*** und Objektiv ***9*** mit einer dem Stereowinkel nahekommenden Neigung von vorn zum kreisförmigen Leuchtfleck ***7*** in der Objektebene führt; der vom fluoreszierenden Objekt ausgehende stereoskopischen Beobachtungsstrahlengang ***8*** läuft zurück über Objektiv ***9*** und Mikroskopkörper ***10*** durch zwei Sperrfilter ***12*** in den Beobachtungstubus ***15.*** Anregungsfilter ***5*** und Sperrfilter ***12*** sind als Modul ***33*** ausgeführt, der je nach Fluoreszenzuntersuchungsverfahren bestückt, im Fluoreszenz-Illuminator ***28*** gewechselt bzw. umgeschalten werden kann. Bei einem Wechsel der Fluoreszenzmodule kann das Beleuchtungslicht 29 durch Einschalten des Verschlusses ***34*** abgedeckt werden.

Diese Beleuchtungsanordnung hat folgende Vorteile: Der in der Objektebene auftreffende Leuchtfleck ist kreisförmig, seine Größe ist durch die jeweilige Zoom- und Objektiwergrößerung bestimmt, und der optimal ausgeleuchtete Leuchtfleck liegt stets in der fokussierten Objektebene, wodurch Objektivwechsel und Umfokussieren des Mikroskops ohne Manipulationen an der Beleuchtungseinrichtung möglich sind. Die Zoomoptik im separatem Beleuchtungskanal ist auf eine bessere UV- und Blaulicht- Transparenz optimiert, eventuelle Eigenfluoreszenzen stören die Beobachtung nicht: Falschlicht oder verschlechterter Bildkontrast werden verhindert. Die Einkopplung des Anregungslichtes in den dritten Beleuchtungskanal ist einfach; der dichroitischen Teilerspiegel ist durch ein Reflektionselement ersetzt, und die dicht beieinander liegenden Anregungs- und Sperrfilter können als flache Module für Schieber oder Filterrad ausgeführt werden, der schnellen Wechsel der Fluoreszenzmodule mittels eines einmal bestückten Schiebers oder Filterrades ist möglich.

Von Nachteil ist, dass die durch bessere UV- und Blaulicht-Transparenz der Zoomoptik erhöhte Beleuchtungsintensität weiter von der Beleuchtungsapertur (entspricht der jeweiligen Beobachtungsapertur) begrenzt wird.

Der Erfindung liegt die Aufgabe zugrunde, die Nachteile des Standes der Technik zu überwinden und eine Auflicht-Fluoreszenzanregung mit einer für alle Beobachtungszoomvergrößerungen hohen Beleuchtungsapertur, die größer als die Apertur des Beobachtungszooms selbst ist, anzugeben.

Die Aufgabe wird durch die in den unabhängigen Patentansprüchen gekennzeichneten Merkmale gelöst, bevorzugte Weiterbildungen sind in den abhängigen Ansprüchen dargestellt.

Erfindungsgemäß wird diese Beleuchtung über eine Beleuchtungsoptik von hinten kommend zwischen, vor oder nach den Kanälen des Beobachtungszooms senkrecht nach unten in ein Objektiv gelenkt, wobei die optischen Achsen des umgelenkten Beleuchtungsstrahlenganges und der Kanäle des Beobachtungszooms im Raum zwischen dem Beleuchtungs-Umlenkelement, der Optiken am Eintritt des Beobachtungszooms und dem Objektiv annähernd parallel zueinander verlaufen. Um die Größe des ausgeleuchteten Bildfeldes den Abbildungsverhältnissen des Beobachtungszooms mit Objektiv anzupassen, wird erfindungsgemäß die Optik der Beleuchtung als Beleuchtungszoom - nachfolgend als "Lichtzoom" bezeichnet - ausgeführt; wobei die Bewegungen von Lichtzoom und Beobachtungszoom den Abbildungsverhältnissen vorteilhafterweise entsprechend miteinander verkoppelt sind. Damit ist der vom Lichtzoom abgebildete Leuchtfleck kreisförmig und liegt stets in der fokussierten Ebene des Mikroskopobjektives.

Nach einer bevorzugten Ausführungsform der vorliegenden Erfindung sind in einem Auflicht-Fluoreszenz-Stereomikroskopkörper die Fluoreszenzbeleuchtung und die stereomikroskopischen Beobachtungskanäle integriert. Zur erfindungsgemäßen Beleuchtung gehören eine Lichttreppe, ein Lichtschutzverschluss, ein Lichtzoom und ein feststehendes Umlenkelement; der Beleuchtungsstrahlengang wird über die Lichttreppe in den Lichtzoom geführt, der den Leuchtfleck entsprechend den jeweils in den Beobachtungskanälen eingestellten Vergrößerungen über das Umlenkelement durch den Anregungsfilter und das Objektiv in die Objektebene abbildet. Zum stereoskopischen Beobachtungsstrahlengang gehören das Objektiv, zwei Sperrfilter und die Optik in den Beobachtungskanälen; das fluoreszierende Objekt wird durch das Objektiv, zwei Sperrfilter und die Optik in den Beobachtungskanälen zur Beobachtung in den Mikroskoptubus abgebildet. Eine geeignete Kopplung zwischen Lichtzoom und Beobachtungszoom bewirkt, das sich die Abbildungsverhältnisse im Lichtzoom den Abbildungsverhältnissen im Beleuchtungszoom entsprechend anpassen. Vorteilhafterweise sind Anregungsfilter und Sperrfilter in Modulen gelagert; die Module selbst sind mit verschiedenen Filterkombinationen ausgerüstet bzw. individuell zu bestücken und sind dadurch schnell auszutauschen, zu wechseln oder umzuschalten. Der Lichtschutzverschluss deckt bei Austauschen, Wechsel oder Umschalten der Module automatisch den Beleuchtungsstrahlengang ab.

Dabei ist es vorteilhaft, wenn die Auflichtbeleuchtung zur Fluoreszenzanregung von hinten senkrecht zu den Optischen Achsen der Beobachtungsstrahlengänge kommend über ein in Höhe der Frontlinsen des Beobachtungszooms vor den Optischen Achsen der Beobachtungsstrahlengänge angeordnetes Umlenkelement mit angekitteter Konvexlinse so zum Objektiv hin reflektiert wird, dass im Raum zwischen Frontlinse Beobachtungszoom, Umlenkelement und Objektiv der Beleuchtungsstrahlengang koaxial und parallel zu den Beobachtungsstrahlengängen verläuft.

Eine bevorzugte Lösung ergibt sich, wenn der Beleuchtungsstrahlengang und die Beobachtungsstrahlengänge das Objektiv in einem Kreisdurchmesser durchsetzen, der die maximal effektiven (freien) Durchmesser der Beobachtungssysteme und des Beleuchtungssystems enthält. Dabei ist der Objektivdurchmesser größer als dieser die maximal effektiven (freien) Durchmesser der Beobachtungssysteme und des Beleuchtungssystems enthaltenen Kreisdurchmesser. Die von den Beobachtungsstrahlengängen aufgespannte Ebene ist gegen eine Meridionalebene der optischen Achse des Objektives parallel versetzt.

Erfindungsgemäß wird die Beleuchtung mit einer Fluoreszenzlichtquelle über den Beleuchtungsstrahlengang geführt, wobei im Beobachtungsstrahlengang wenigstens ein Sperrfilter für kurzwellige Lichtstrahlen und im Beleuchtungsstrahlengang je ein Erregerfilter für eine Bandbreitenbegrenzung des Fluoreszenzlichtes angeordnet ist. Sperrfilter und Erregerfilter liegen in einer Ebene und sind in einem gemeinsamen Filterhalter gelagert. Im Raum zwischen Frontlinse, Beobachtungszoom, Umlenkelement und Objektiv ist ein Filterrad angeordnet, das Aufnahmen für drei austauschbare Filterhalter mit unterschiedlichen Kombinationen von Sperr- und Erregerfiltern aufweist, die alternativ durch Verdrehen des Filterrades in die Kanäle der Beobachtungsstrahlengänge und des Beleuchtungsstrahlengangs geschaltet werden können, wobei auch das Filterrad selbst gegen ein anderes Filterrad gewechselt werden kann. Für die normale Beleuchtung ohne Fluoreszenzanregung ist ein Filterträger ohne Sperr- und Erregerfilter bzw. mit Dämpfungsfiltern anstelle der Sperrfilter und einem UV- Filter anstelle des Erregerfilters vorgesehen.

Erfindungsgemäß werden der Beobachtungszoom und der Beleuchtungszoom von je zwei Antrieben, vorzugsweise Spindelantrieben, miteinander gekoppelt oder auch selektiv angetrieben verstellt. Dabei werden die Spindelantriebe für den Beobachtungszoom und für den Lichtzoom wie in DE 198 222 56 beschrieben, auf deren kompletten Inhalt hiermit Bezug genommen wird, über eine mit anwendungsbezogener Software arbeitende elektronische Steuereinheit entsprechend der jeweiligen linearen oder beliebig nichtlinearen Bahnkurven schrittweise so synchron angesteuert, dass sich im gekoppelten Modus bei Änderung der Vergrößerung im Beobachtungsstrahlengang die Ausleuchtung im Beleuchtungsstrahlengang den Größen- und Aperturverhältnissen in der Objektebene entsprechend anpasst.

Die erfindungsgemäße Lösung eines Auflicht-Fluoreszenz-Stereomikroskopkörpers ist für den Anwender besonders vorteilhaft, da die koaxiale Auflicht-Fluoreszenzanregung mit einer für alle Beobachtungszoomvergrößerungen hohen Beleuchtungsapertur erfolgt, und durch die Kopplung von Lichtzoom und Beobachtungszoom die Größe des scharf begrenzten, und ausreichend homogen ausgeleuchteten kreisförmigen Bildfeldes stets den Abbildungsverhältnissen des Beobachtungszooms mit Objektiv angepasst ist und in der fokussierten Objektebene liegt. Es ist von Vorteil, wenn die Optik des Lichtzooms einen hohen Lichtleitwert hat, und auf eine ausreichend hohe UV- und Blaulicht- Transparenz optimiert ist, damit wird eine hohe Beleuchtungsstärke in der Objektebene erreichbar. Ein weiterer Vorteil ist, dass die im Raum zwischen dem Beleuchtungs-Umlenkelement, den Optiken am Eintritt des Beobachtungszooms und dem fluoreszenzgeeigneten Objektiv angeordneten Anregungsfilter und Sperrfilter schnell gewechselt, ausgetauscht und abgedeckt werden können.

Bevorzugte Ausführungsbeispiele des erfindungsgemäßen Auflicht-Fluoreszenz-Stereomikroskopkörpers mit integrierter Fluoreszenzbeleuchtung und stereomikroskopischen Beobachtungskanälen werden anhand der Zeichnungen ***Fig.7*** bis ***Fig. 14*** näher erläutert. Es zeigen:
- ***Fig.7***: das Optikschema des Auflicht- Fluoreszenz- Stereomikroskopkörpers,
- ***Fig.8***: das Optikschema des Auflicht- Fluoreszenz- Stereomikroskopkörpers mit den gekoppelten Optikbaugruppen,
- ***Fig.9***: die Optikbaugruppen mit den entsprechenden Stellelementen und ihrer Steuerein heit,
- ***Fig. 10***: die Ausführung und Einsetzmöglichkeit der Fluoreszenzmodule in ein Filterrad und mit diesem in den Auflicht- Fluoreszenz- Stereomikroskopkörper,
- ***Fig. 11***: das Prinzip der Lagerung des Filterrades im Auflicht- Fluoreszenz- Stereomikroskopkörper,
- ***Fig.12***: die Anordnung des bestückten Filterrades im Auflicht- Fluoreszenz- Stereomikroskopkörper zwischen Umlenkelement mit Konvexlinse des Beleuchtungsstrahlenganges, der ersten Linsengruppe des Beobachtungsstrahlenganges und dem Objektiv,
- ***Fig.13***: die Ausleuchtung des zu beobachtenden Objektfeldes bei Spotbeleuchtung/-anregung, und
- ***Fig.14***: die Anordnung, Ausführung und Ablaufdynamik der Zoomoptik in den Beobachtungsstrahlengängen und der Zoomoptik im Beleuchtungsstrahlengang.

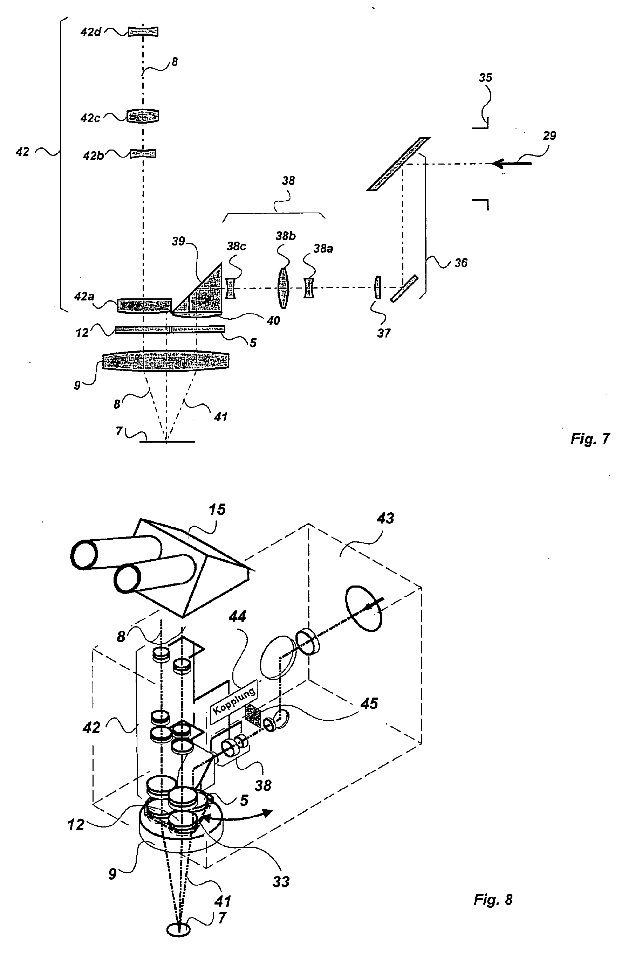

Nach ***Fig.7*** und ***Fig. 8*** wird das vom Leuchtenansatz ***35*** des Auflicht-Fluoreszenz- Stereomikroskopkörpers ***43*** einfallende Beleuchtungslicht ***29*** über eine Lichttreppe ***36,*** einer Beleuchtungslinse ***37,*** einen Lichtzoom ***38,*** einem feststehenden Umlenkelement ***39*** mit angearbeiteter Konvexlinse ***40*** durch den Anregungsfilter ***5*** gelenkt, und dann als Anregungsstrahlengang ***41*** durch das Objektiv ***9*** mit einer dem Stereowinkel nahekommenden Neigung von hinten zum kreisförmigen Leuchtfleck ***7*** in der Objektebene geführt; der vom fluoreszierenden Objekt ausgehende stereoskopische Beobachtungsstrahlengang ***8*** läuft zurück über Objektiv ***9*** durch zwei Sperrfilter ***12*** in den Beobachtungszoom ***42*** des Auflicht-Fluoreszenz-Stereomikroskopkörpers ***43*** und weiter zum Beobachtungstubus ***15***; der Lichtzoom ***38*** ist über ein geeignetes Koppelelement ***44*** mit dem Beobachtungszoom ***42*** so verbunden, dass sich bei Änderung der Vergrößerung im Beobachtungszoom ***42*** die Beleuchtungsverhältnisse im Anregungsstrahlengang ***41*** entsprechend anpassen; Anregungsfilter ***5*** und Sperrfilter ***12*** sind in Filtermodulen ***33*** gelagert, die je nach Fluoreszenzuntersuchungsverfahren bestückt, im Auflicht- Fluoreszenz- Stereomikroskopkörper ***43*** gewechselt bzw. umgeschalten werden können, wobei bei einem Wechsel der Fluoreszenzmodule das Beleuchtungslicht ***29*** durch einen sich automatisch einschaltenden Verschluss ***45*** abgedeckt wird.

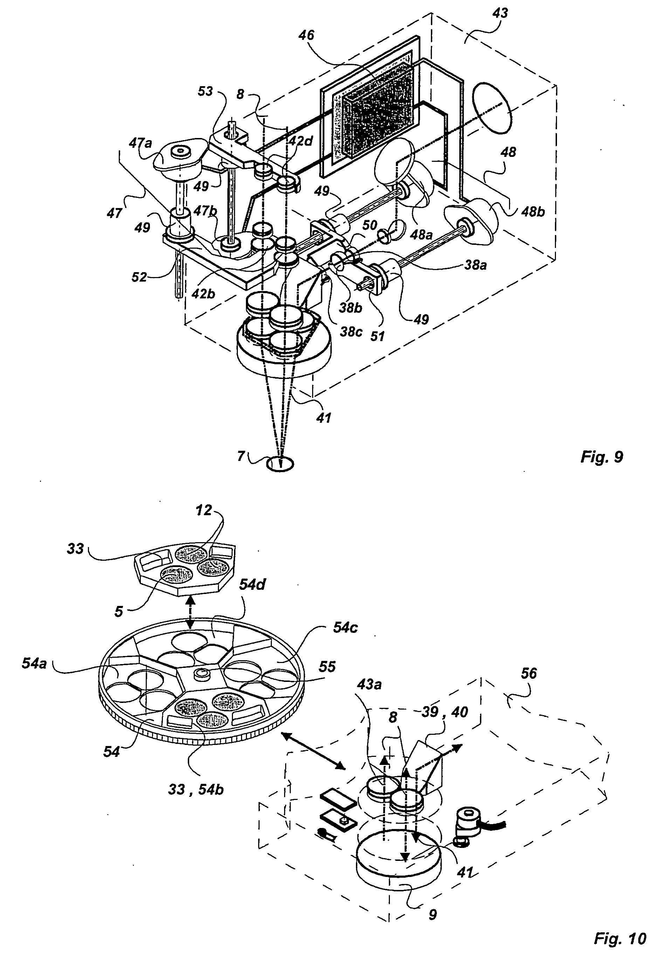

Nach ***Fig. 9*** ist das im Auflicht-Fluoreszenz- Stereomikroskopkörpers ***43*** angeordnete geeignete Koppelelement ***44,*** eine elektronische Steuereinheit ***46,*** die vier Spindelantriebe ***47a****,* ***47b, 48a*** und ***48b*** entsprechend der jeweiligen linearen oder beliebig nichtlinearen Bahnkurven schrittweise synchron ansteuert, wobei die zwei Spindelantriebe ***48*** auf den Lichtzoom ***38*** und die zwei Spindelantriebe ***47*** auf den Beobachtungszoom ***42*** wirken; dabei verstellt Spindelantrieb ***48a*** mittels der Spindelmutter ***49*** den Schlitten ***50*** mit den zwei Beleuchtungslinsen ***38a*** und ***38c,*** der Spindelantrieb ***48b*** mittels der Spindelmutter ***49*** den Schlitten ***51*** mit einer Beleuchtungslinse ***38b,*** der Spindelantrieb ***47a*** mittels der Spindelmutter ***49*** den Schlitten ***52*** mit der ersten stellbaren Linsengruppe ***42b*** des Beobachtungszooms ***42,*** und der Spindelantrieb ***47b*** mittels der Spindelmutter ***49*** den Schlitten ***53*** mit der zweiten stellbaren Linsengruppe ***42d*** des Beobachtungszooms ***42*** ; die elektronische Steuereinheit ***46*** steuert die Spindelantriebe des Lichtzooms ***38*** und des Beobachtungszooms ***42*** gemeinsam an, bei Bedarf ist die Kopplung von Lichtzoom und Beobachtungszoom für eine Einzelverstellung der beiden Zoomsysteme lösbar.

Nach ***Fig. 10*** können die nach Fluoreszenzuntersuchungsverfahren mit je einem Anregungsfilter ***5*** und je zwei Sperrfiltern ***12*** bestückten Filtermodule ***33*** in vier Modulaufnahmen ***54a, 54b,* 54c** und **54d** des Filterrades **54** eingesetzt und gewechselt werden; das Filterrad selbst ist im Raum zwischen Umlenkelement ***39*** mit Konvexlinse ***40,*** der ersten Linsengruppe ***42a*** und dem Objektiv ***9*** in die Filterradaufnahme ***56*** des Auflicht-Fluoreszenz-Stereomikroskopkörpers einschieb- und wechselbar.

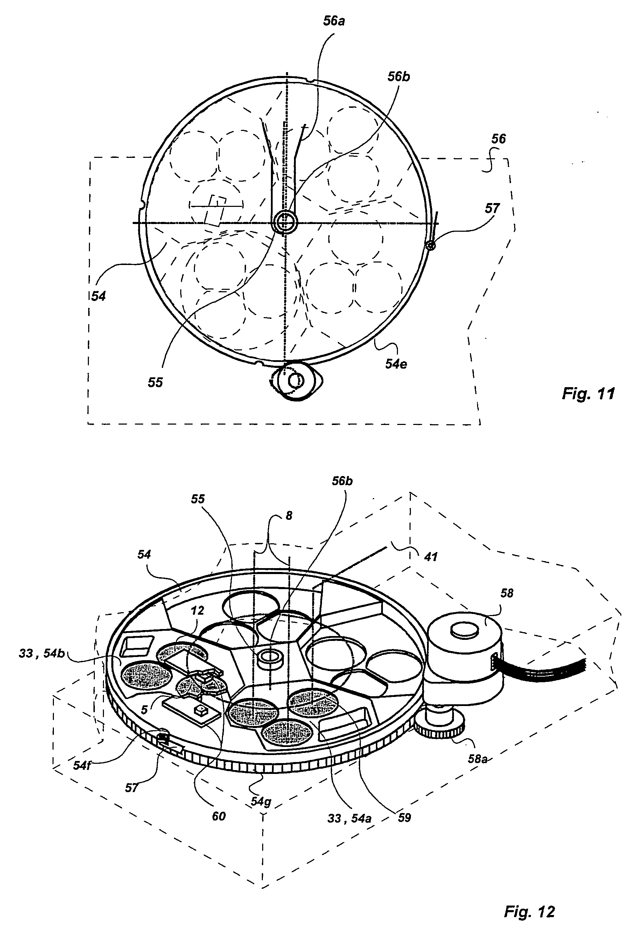

In ***Fig. 11*** ist die Mittenachse der Führungsnut ***56a*** zum Einführen des Filterrades ***54*** mit seinem Lagerzapfen ***55*** in die Filterradaufnahme ***56*** geringfügig zur Mittenachse des Drehlagers ***56b*** am Ende der Führungsnut seitlich versetzt, wobei die Breite der Führungsnut ***56a*** und das Drehlager ***56b*** am Ende der Führungsnut dem Durchmesser des Lagerzapfens ***55*** vom Filterrad entsprechen; beim Einschieben des Filterrades legt sich die Andruckfeder ***57*** an den Durchmesser ***54e*** des Filterrades an, und die dabei auftretende Gegenkraft muss überwunden werden,

In Fig.**12** ist der Anschlag erreicht und die o.g. Gegenkraft überwunden, die Andruckfeder ***57*** hat den Lagerzapfen ***55*** in das Drehlager ***56b*** gedrückt und nach geringfügigem Drehen des Filterrades ***54*** hat die Andruckfeder ***57*** selbst in einer der vier Funktionsstellungen ***54f*** für die Filtermodule ***33*** gerastet. Damit rastet das Filterrad ***54*** mittels einer Andruckfeder ***57*** sowohl im Drehlager ***56b*** als auch in den **vier** Funktionsstellungen ***54f*** für die Filtermodule ***33*** ein. Im eingerasteten Zustand ist die als Griffelement ausgebildete Verzahnung ***54g*** des Filterrades ***54*** mit dem Ritzel ***58a*** des Antriebsmotors ***58*** im spielfreien Eingriff; das Filterrad kann bei sicherer Rastung motorisch oder manuell vor- und zurückgedreht werden. Zusätzlich ist über der beim Drehen des Filterrades ***54*** von dem Anregungsfilter und dem innenliegenden Sperrfilter beschriebenen Bahnkurve ***59*** ein elektrooptisches Sender-Empfänger-System zur Farberkennung ***60*** angeordnet. Mit diesem werden beim motorischen oder manuellem Umschalten zwischen den Filtermodulen die genannten Filter nacheinander einzeln gemessen, und daraus die Filterparameter der eingesetzten Filterkombination automatisch bestimmt sowie der Lichtschutzverschluss ***45*** im Beleuchtungsstrahlengang beim Umschalten bzw. Wechsel indirekt mit gesteuert.

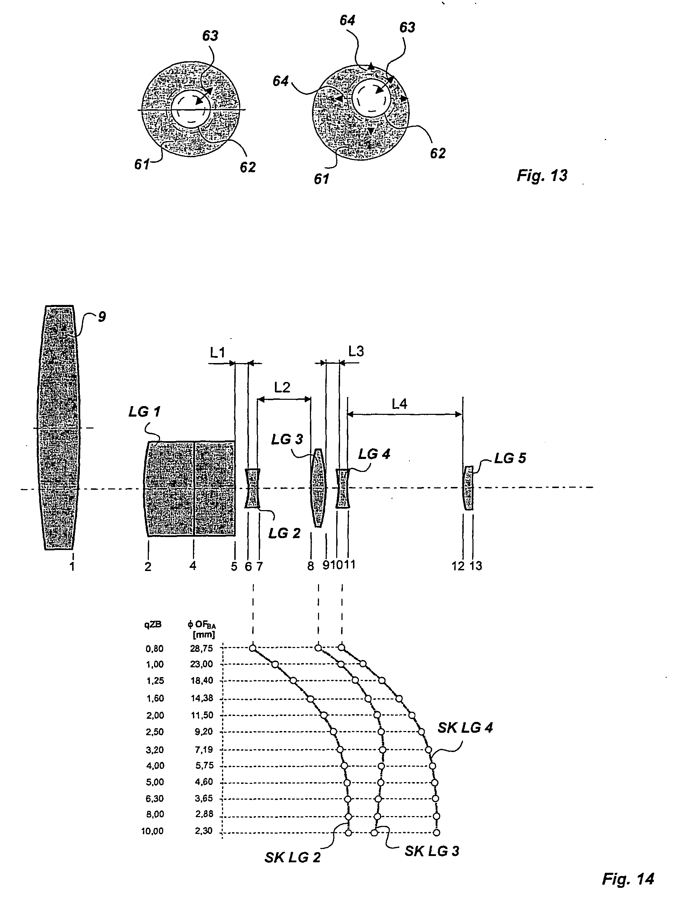

In ***Fig. 13*** bezeichnen die Bezugsziffem ***61*** das zu beobachtende Objektfeld, ***62*** das das Objektfeld nicht vollständig ausleuchtende Leuchtfeld bei Spotbeleuchtung bzw. Spotanregung, ***63*** die Größenvariation des Spot-Leuchtflecks ***62,*** und ***64*** die Lageverschiebung des Spot- Leuchtflecks ***62*** im zu beobachten-den Objektfeld ***61.***

In ***Fig.14*** bezeichnen neben den schon bei vorherigen Figuren angezogenen Bezugsziffern im Beobachtungsstrahlengang die Buchstaben ***A***_{*v*} das Maß für den Abstand vom Objektiv bis zur Eintrittsfläche der ersten Zoom-Linsengruppe, ***B***_{*v*} das Maß für den Abstand vom Objektiv bis zur Eintrittsfläche der zweiten Zoom-Linsengruppe, **C**ᵥ das Maß für den Abstand vom Objektiv bis zur Eintrittsfläche der dritten Zoom-Linsengruppe und ***D***_{*v*} das Maß für den Abstand vom Objektiv bis zur Eintrittsfläche der vierten Zoom-Linsengruppe;
im Beleuchtungsstrahlengang die Buchstaben ***A***_{*L*} das Maß für den Abstand vom Objektiv bis zur Lichtaustrittsfläche des Umlenkprismas mit Linse, ***B***_{*L*} das Maß für den Abstand vom Objektiv bis zur Lichtaustrittsfläche der ersten Zoomlinse, ***C***_{*L*} das Maß für den Abstand vom Objektiv bis zur Lichtaustrittsfläche der zweiten Zoomlinse, ***D***_{*L*} das Maß für den Abstand vom Objektiv bis zur Lichtaustrittsfläche der dritten Zoomlinse und ***E***_{*L*} das Maß für den Abstand vom Objektiv bis zur Lichtaustrittsfläche der vierten Zoomlinse. Das Diagramm zeigt die Bewegungsdynamik der Zoomsysteme im Beobachtungs- und Beleuchtungsstrahlengang in Abhängigkeit der Mikroskopvergrößerung.

Ein bevorzugtes Ausführungsbeispiel für das Zoomsystem im Beleuchtungsstrahlengang ist in der folgenden Tabelle dargestellt:

| Flächennummer | Radius [mm] | Abstand [mm] | nₑ | νₑ |
|---|---|---|---|---|
| 1 | | 18,00 | | |
| 2 | 37,047 | 14,50 | 1,51872 | 63,96 |
| 3 | ∞ | 12,00 | 1,51872 | 63,96 |
| 4 | ∞ | | | |
| | | L1 32,00 ÷ 3,04 | | |
| 5 | -8,058 | 2,50 | | |
| 6 | 25,30 | | 1,58482 | 40,57 |
| | | L2 4,21 ÷ 15,50 | | |
| | | | | |
| 7 | 16,55 | 4,40 | 1,48914 | 70,23 |
| 8 | -16,55 | | | |
| | | L3 14,72 ÷ 3,43 | | |
| 9 | - 20,54 | 2,50 | 1,58482 | 40,57 |
| 10 | ∞ | | | |
| | | L4 2,17 ÷ 31,13 | | |
| 11 | 47,66 | 3,00 | 1,48914 | 70,23 |
| 12 | ∞ | | | |

Dabei ist die Flächennummer 1 der Objektivaustrittsfläche, die Flächennummern 2 bis 5 der ersten Linsengruppe (LG 1), die Flächennummern 6 und 7 der zweiten Linsengruppe (LG 2), die Flächennummern 8 und 9 der dritten Linsengruppe (LG 3), die Flächennummern 10 und 11 der vierten Linsengruppe (LG 4) und die Flächennummern 12 und 13 der fünften Linsengruppe (LG 5) zugeordnet. Während der Zoombewegung ist bei Zoomvergrößerungen im Beobachtungsstrahlengang 4x - 10x die Prismeneintrittsfläche (Flächennummer 2), bei Zoomvergrößerungen im Beobachtungsstrahlengang 0,8x - 4x die bewegte Sammellinse (Flächennummer 7) die Öffnungsblende des Beleuchtungsstrahlenganges.

In den Spalten der Tabelle sind die Flächennummer einer Linse oder eines Kittgliedes, der Krümmungsradius der jeweiligen Fläche, der Abstand zur nächsten Fläche, die Brechzahl (ne) und die Dispersion (Abbezahl νe = (ne - 1) / (nF' - nC') ) aufgelistet. Ein Luftabstand ist durch eine Leerzeile in den Materialparametern gekennzeichnet und L1, L2, L3 und L4 bezeichnen die veränderlichen Abstände zwischen den Linsen bzw. Linsengruppen des Zoomsystems.

Bei Kopplung des Beobachtungszooms mit dem Lichtzoom sind die Abstände L1, L2, L3 und L4 in Abhängigkeit der Zoomvergrößerung im Beobachtungsstrahlengang qZB durch nachfolgende Tabelle spezifiziert, wobei der Zoomvergrößerung im Beobachtungsstrahlengang qZB die Größe des beobachteten und ausgeleuchteten Objektfelddurchmessers ⌀ OFBA und die Abstände L1, L2, L3 und L4 zugeordnet sind:

| Zoomvergrößerung im Beobachtungsstrahlengang qZB [x] | Objektfelddurchmesser ⌀ OFBA [mm] | Abstand L1 [mm] | Abstand L2 [mm] | Abstand L3 [mm] | Abstand L4 [mm] |
|---|---|---|---|---|---|
| 10,00 | 2,30 | 32,004 | 4,214 | 14,717 | 2,171 |
| 8,00 | 2,88 | 32,176 | 4,663 | 14,268 | 2,000 |
| 6,30 | 3,65 | 31,798 | 5,417 | 13,514 | 2,377 |
| 5,00 | 4,60 | 31,323 | 6,311 | 12,619 | 2,847 |
| 4,00 | 5,75 | 30.948 | 7,157 | 11,774 | 3,227 |
| 3,20 | 7,19 | 29,476 | 8,680 | 10,251 | 4,700 |
| 2,50 | 9,20 | 27,715 | 10,316 | 8,614 | 6,460 |
| 2,00 | 11,50 | 24,520 | 12,170 | 6,761 | 9,656 |
| 1,60 | 14,38 | 20,690 | 13,643 | 5,287 | 13,486 |
| 1,25 | 18,40 | 16,114 | 14,537 | 4,394 | 18,065 |
| 1,00 | 23,00 | 10,773 | 15,678 | 3,227 | 23,402 |
| 0,80 | 28,75 | 3,043 | 15,499 | 3,432 | 31,133 |

In den Spalten der Tabelle sind 'die Zoomvergrößerung im Beobachtungsstrahlengang (qZ), die Größe des in Abhängigkeit der Zoomvergrößerung beobachteten und ausgeleuchteten Objektfelddurchmessers (⌀ OFBA) und die veränderlichen Abstände L1, L2, L3 und L4 zwischen den Linsen bzw. Linsengruppen aufgelistet.

Die Erfindung ist nicht an die dargestellten Ausführungsbeispiele gebunden, fachmännische Weiterentwicklungen führen nicht zu einem Verlassen des Schutzbereiches der Ansprüche.

### Auflistung der Bezugsziffern und Bezeichnungen

- ***1***: Stativsäule
- ***2***: freitragender Halter
- ***3***: Lichtleiter
- ***4***: Fokussiervorsatz
- ***5***: Anregungsfilter
- ***6, 26, 41***: Anregungsstrahlengang
- ***7***: Leuchtfleck in der Objektebene
- ***8***: stereoskopischer Beobachtungsstrahlengang
- ***9***: Objektiv
- ***10***: Stereomikroskopkörper
- ***11***: Filterzwischentubus
- ***12***: Sperrfilter
- ***13***: Ringleuchte
- ***14, 32***: Anregungslicht
- ***15***: Beobachtungstubus
- ***16, 28***: Fluoreszenzilluminator
- ***17, 21, 29***: Beleuchtungslicht
- ***18, 34, 45***: Verschluss, Shutter
- ***19***: dichroitische Spiegel
- ***20***: Schiebermodul
- ***22***: Zwillings- Lichtleiter
- ***23***: Einzelfaserbündel
- ***24***: Fokussieroptiken
- ***25***: Beleuchtungsebene
- ***27***: Beobachtungsebene
- ***30***: Spiegel
- ***31***: Beleuchtungskanal
- ***33***: Filtermodul
- ***35***: Leuchtenansatz
- ***36***: Beleuchtungslinse
- ***37***: Lichttreppe
- ***38***: Lichtzoom
- ***38a 38b 38c***: Beleuchtungslinsen Lichtzoom
- ***39***: Umlenkelement
- ***40***: Konvexlinse
- ***42***: Beobachtungszoom
- ***42a - 42d***: Linsengruppen Beobachtungszoom
- ***43***: Auflicht- Fluoreszenz- Stereomikroskopkörpers
- ***44***: Koppelelement
- ***46***: elektronische Steuereinheit
- ***47***: Spindelantriebe Beobachtungszoom ***42***
- ***47a***: Spindelantrieb erste stellbare Linsengruppe ***42b***
- ***47b***: Spindelantrieb zweite stellbare Linsengruppe ***42d***
- ***48***: Spindelantriebe Lichtzoom ***38***
- ***48a***: Spindelantrieb Beleuchtungslinsen ***38a*** und ***38c***
- ***48b***: Spindelantrieb Beleuchtungslinse ***38b***
- ***49***: Spindelmutter
- ***50***: Schlitten Beleuchtungslinsen ***38a*** und ***38c***
- ***51***: Schlitten Beleuchtungslinse ***38b***
- ***52***: Schlitten ersten stellbaren Linsengruppe ***42b***
- ***53***: Schlitten zweiten stellbaren Linsengruppe ***42d***
- ***54***: Filterrad
- ***54a- 54d***: Modulaufnahmen
- ***54e***: Durchmesser des Filterrades
- ***54f***: Funktionsstellungen
- ***54g***: Verzahnung
- ***55***: Lagerzapfen
- ***56***: Filterradaufnahme
- ***56a***: Führungsnut
- ***56b***: Drehlager
- ***57***: Andruckfeder
- ***58***: Antriebsmotor
- ***58a***: Ritzel
- ***59***: Bahnkurve Anregungsfilter und innenliegendes Sperrfilter unter ***60***
- ***60***: elektrooptisches Sender- Empfänger- System
- ***61***: beobachtetes Objektfeld
- ***62***: Leuchtfeld bei Spotbeleuchtung/Spotanregung
- ***63***: Größenvariation des Spot- Leuchtflecks
- ***64***: Lageverschiebung des Spot- Leuchtflecks
- ***LG 1***: erste optische Linsengruppe des Lichtzooms
- ***LG 2***: zweite optische Linsengruppe des Lichtzooms
- ***LG 3***: dritte optische Linsengruppe des Lichtzooms
- ***LG 4***: vierte optische Linsengruppe des Lichtzooms
- ***LG 5***: fünfte optische Linsengruppe des Lichtzooms
- ***EP***_{***L***}: Eintrittspupille des Lichtzooms
- ***q***_{***ZL***}: Zoomvergrößerung im Lichtzoom
- ***q***_{***ZB***}: Zoomvergrößerung im Beobachtungsstrahlengang
- ***q***_{***Z***}: Zoomfaktor des Lichtzooms = maximale Zoomvergrößerung / minimale Zoomvergrößerung
- ⌀***OF***_{***BA***}: beobachteter und ausgeleuchteter Objektfelddurchmessers
- ***L1***: Abstand zwischen erster und zweiter optischer Linsengruppe
- ***L2***: Abstand zwischen zweiter und dritter optischer Linsengruppe
- ***L3***: Abstand zwischen dritter und vierter optischer Linsengruppe
- ***L4***: Abstand zwischen vierter und fünfter optischer Linsengruppe

## Patentansprüche

1. Auflicht-Fluoreszenz-Stereomikroskop mit zwei Okularen, einem Objektiv mit zwei Beobachtungsstrahlengängen, mindestens einem Beleuchtungsstrahlengang,
wobei der Beleuchtungsstrahlengang vorzugsweise auf der den Okularen entgegengesetzten Seite verläuft
wobei ein reflektierendes Bauelement vorgesehen ist, welches den Beleuchtungsstrahlengang so ablenkt, dass er das Objektiv vorzugsweise parallel zu den Beobachtungsstrahlengängen durchsetzt

2. Auflicht-Fluoreszenz-Stereomikroskop nach Anspruch 1, wobei eine erste Zoomeinrichtung für die Beobachtungsstrahlengänge und eine zweite Zoomeinrichtung für den Beleuchtungsstrahlengang vorgesehen ist.

3. Auflicht-Fluoreszenz-Stereomikroskop nach Anspruch 2, wobei die erste und die zweite Zoomeinrichtung miteinender in Wirkverbindung stehen, wobei vorzugsweise eine Verstellung der ersten Zoomeinrichtung eine angepasste Veränderung der zweiten Zoomeinrichtung bewirkt.

4. Auflicht-Fluoreszenz-Stereomikroskop nach Anspruch 2 oder 3, wobei die ersten und zweiten Zoomeinrichtungen motorische Antriebsmittel aufweisen, welche getrennt oder gemeinsam angesteuert werden können.

5. Auflicht-Fluoreszenz-Stereomikroskop nach Anspruch 4, wobei die motorischen Antriebsmittel von einem programmierbaren elektronischen Controller angesteuert werden.

6. Auflicht-Fluoreszenz-Stereomikroskop nach einem der Ansprüche 1 bis 5, wobei ein Filterhalter vorgesehen ist, welcher Anregungsfilter für den Beleuchtungsstrahlengang und Emissionsfilter für die Beobachtungsstrahlengänge aufweist, wobei der Filterhalter vorzugsweise in dem Bereich des Stereomikroskops anbringbar ist, in dem Beleuchtungsstrahlengang und Beobachtungsstrahlengänge im wesentlichen parallel verlaufen.

7. Auflicht-Fluoreszenz-Stereomikroskop nach Anspruch 6, wobei ein Filterwechsler vorgesehen ist, welcher mehrere Filterhalter aufnehmen kann und einen schnellen Wechsel zwischen verschiedenen Filterhaltern ermöglicht.

8. Auflicht-Fluoreszenz-Stereomikroskop nach Anspruch 6 oder 7, wobei der Filterhalter oder der Filterwechsler austauschbar ist.

9. Auflicht-Fluoreszenz-Stereomikroskop nach Anspruch 6, 7 oder 8, wobei in den Beobachtungsstrahlengängen oder im Beleuchtungsstrahlengang ein Verschluss vorgesehen ist, welcher beim Wechsel der Filter den Strahlengang unterbricht und so verhindert, dass Beleuchtungslicht in die Okulare gelangen kann.

10. Auflicht-Fluoreszenz-Stereomikroskop nach Anspruch 4 oder 5, wobei die motorischen Antriebsmittel für den Beleuchtungsstrahlengang so ansteuerbar sind, dass nur ein Teil des Beobachtungsstrahlengangs ausgeleuchtet wird.

11. Auflicht-Fluoreszenz-Stereomikroskop nach Anspruch 10, wobei Mittel vorgesehen sind, durch welche die Orientierung des den Beobachtungsstrahlengang nur teilweise ausleuchtenden Beleuchtungsstrahlengangs steuerbar ist.

12. Auflicht-Fluoreszenz-Stereomikroskop nach einem der Ansprüche 1 bis 11, wobei die Mittel zum Unterbrechen oder/und Abschwächen des Beleuchtungsstrahlengangs vorgesehen sind.

13. Auflicht-Fluoreszenz-Stereomikroskop nach einem der Ansprüche 6 bis 8, wobei in der Nähe des Filterhalters eine Einrichtung zur Bestimmung der Filtercharakteristika vorgesehen ist.

14. Auflicht-Fluoreszenz-Stereomikroskop nach Anspruch 13, wobei eine Einrichtung zur Anzeige der Filtercharakteristika vorgesehen ist.

15. Auflicht-Fluoreszenz-Stereomikroskop nach Anspruch 1, wobei eine Beleuchtungsoptik im Beleuchtungsstrahlengang eine erste, zweite, dritte, vierte und fünfte Linsengruppe mit positiver, negativer, positiver, negativer und positiver Brechkraft in dieser Reihenfolge von der Seite des Objektives aus gesehen enthält und in der die zweite mit der vierten und die dritte Linsengruppe als Lichtzoomoptik zur Brennweitenänderung in Richtung der optischen Achsen bewegbar sind, während die erste und fünfte Linsengruppe in fester Stellung steht.

16. Auflicht-Fluoreszenz-Stereomikroskop nach Anspruch 15, wobei die Linsenanordnung im Beleuchtungsstrahlengang von der Seite des Objektives aus gesehen durch nachfolgende Tabelle spezifiziert ist, wobei die Flächennummer 1 der Objektivaustrittsfläche, die Flächennummern 2 bis 5 der ersten Linsengruppe (LG 1), die Flächennummern 6 und 7 der zweiten Linsengruppe (LG 2), die Flächennummern 8 und 9 der dritten Linsengruppe (LG 3), die Flächennummern 10 und 11 der vierten Linsengruppe (LG 4) und die Flächennummern 12 und 13 der fünften Linsengruppe (LG 5) zugeordnet sind, und und wobei während der Zoombewegung bei Zoomvergrößerungen im Beobachtungsstrahlengang 4x - 10x die Prismeneintrittsfläche (Flächennummer 2), und bei Zoomvergrößerungen im Beobachtungsstrahlengang 0,8x - 4x die bewegte Sammellinse (Flächennummer 7) die Öffnungsblende des Beleuchtungsstrahlenganges sind:
| Flächennummer | Radius [mm] | Abstand [mm] | nₑ | νₑ |
|---|---|---|---|---|
| 1 | | 18,00 | | |
| 2 | 37,047 | 14,50 | 1,51872 | 63,96 |
| 3 | ∞ | 12,00 | 1,51872 | 63,96 |
| 4 | ∞ | | | |
| | | L1 32,00 ÷ 3,04 | | |
| 5 | -8,058 | 2,50 | | |
| 6 | 25,30 | | 1,58482 | 40,57 |
| | | L2 4,21 ÷ 15,50 | | |
| | | | | |
| 7 | 16,55 | 4,40 | 1,48914 | 70,23 |
| 8 | -16,55 | | | |
| | | L3 14,72 ÷ 3,43 | | |
| 9 | - 20, 54 | 2,50 | 1,58482 | 40, 57 |
| 10 | ∞ | | | |
| | | L4 2,17 ÷ 31,13 | | |
| 11 | 47,66 | 3,00 | 1,48914 | 70,23 |
| 12 | ∞ | | | |
wobei in den Spalten der Tabelle die Flächennummer einer Linse oder eines Kittgliedes, der Krümmungsradius der jeweiligen Fläche, der Abstand zur nächsten Fläche, die Brechzahl (ne) und die Dispersion (Abbezahl νe = (ne - 1) / (nF' - nC')) aufgelistet sind, und wobei weiterhin ein Luftabstand durch eine Leerzeile in den Materialparametern gekennzeichnet ist und L1, L2, L3 und L4 veränderliche Abstände bezeichnen.

17. Auflicht-Fluoreszenz-Stereomikroskop nach einem der Ansprüche 15 oder 16, wobei bei Kopplung des Beobachtungszooms mit dem Lichtzoom die Abstände L1, L2, L3 und L4 in Abhängigkeit der Zoomvergrößerung im Beobachtungsstrahlengang qZB durch nachfolgende Tabelle spezifiziert sind, wobei der Zoomvergrößerung im Beobachtungsstrahlengang qZB die Größe des beobachteten und ausgeleuchteten Objektfelddurchmessers ⌀ OFBA und die Abstände L1, L2, L3 und L4 zugeordnet sind:
| Zoomvergrößerung im Beobachtungsstrahlengang qZB [x] | Objektfelddurchmesser ⌀ OFBA [mm] | Abstand L1 [mm] | Abstand L2 [mm] | Abstand L3 [mm] | Abstand L4 [mm] |
|---|---|---|---|---|---|
| 10,00 | 2,30 | 32,004 | 4,214 | 14,717 | 2,171 |
| 8,00 | 2,88 | 32,176 | 4,663 | 14,268 | 2,000 |
| 6,30 | 3,65 | 31,798 | 5,417 | 13,514 | 2,377 |
| 5,00 | 4,60 | 31,323 | 6,311 | 12,619 | 2,847 |
| 4,00 | 5,75 | 30.948 | 7,157 | 11,774 | 3,227 |
| 3,20 | 7,19 | 29,476 | 8,680 | 10,251 | 4,700 |
| 2,50 | 9,20 | 27,715 | 10,316 | 8,614 | 6,460 |
| 2,00 | 11,50 | 24,520 | 12,170 | 6,761 | 9,656 |
| 1,60 | 14,38 | 20,690 | 13,643 | 5,287 | 13,486 |
| 1,25 | 18,40 | 16,114 | 14,537 | 4,394 | 18,065 |
| 1,00 | 23,00 | 10,773 | 15,678 | 3,227 | 23,402 |
| 0,80 | 28,75 | 3,043 | 15,499 | 3,432 | 31,133 |
